# EUROPEAN PATENT SPECIFICATION

(11) **EP 3 851 819 B1**
(45) Date of publication and mention of the grant of the patent: **20.03.2024**
(21) Application number: 19859342.8
(22) Date of filing: 11.09.2019
(51) Int. Cl.: G01K 11/12, G01K 11/18

(54) **TEMPERATURE MEASUREMENT DEVICE, TEMPERATURE MEASUREMENT SYSTEM, AND TEMPERATURE MEASUREMENT METHOD**
TEMPERATURMESSVORRICHTUNG, TEMPERATURMESSSYSTEM UND TEMPERATURMESSVERFAHREN
DISPOSITIF DE MESURE DE TEMPÉRATURE, SYSTÈME DE MESURE DE TEMPÉRATURE ET PROCÉDÉ DE MESURE DE TEMPÉRATURE

(30) Priority: 14.09.2018 JP 2018172421
(43) Date of publication of application: 21.07.2021
(73) Proprietor: YOKOGAWA ELECTRIC CORPORATION, Musashino-shi Tokyo 180-8750 (JP)
(72) Inventor: OGAWA, Junichi, Musashino-shi, Tokyo 180-8750 (JP); MIYAZAKI, Shunichi, Musashino-shi, Tokyo 180-8750 (JP)
(74) Representative: Winter, Brandl - Partnerschaft mbB
(86) International application number: PCT/JP2019/035778
(87) International publication number: WO 2020/054785

(56) References cited:
- JP-A- H10 176 962
- JP-A- 2000 002 677
- JP-A- 2003 322 628
- JP-A- 2009 109 321
- JP-A- 2011 106 990
- JP-A- 2016 145 737
- US-A1- 2015 110 150

## Description

### TECHNICAL FIELD

The present disclosure relates to a temperature measurement apparatus, a temperature measurement system, and a temperature measurement method.

### BACKGROUND

Technology for non-contact measurement of the temperature of an object to be measured, such as a fluid or the like, by an optical method is known.

For example, JP 2006-258537 A discloses a temperature measurement apparatus that excites a fluorescent substance, included in a fluid flowing through a minute passage, with laser light and measures the attenuation characteristics of the detected intensity of emitted fluorescent light to detect the temperature of the fluid. JP H08-110270 A discloses a temperature measurement apparatus that irradiates laser light onto a fluid to be measured and uses fluorescent light induced by the laser light to measure the temperature of the fluid to be measured.

Further, US 2015/ 110 150 A1 describes an apparatus and a method of frequency domain thermoreflectance (FDTR) imaging of a thermophysical property or a set of thermophysical properties of a sample. The method comprises measuring the amplitude and/or phase of a beam of radiation reflected from a sample surface, while a heat source applied to the sample is modulated at at least two modulation frequencies simultaneously. Such measurement can be reiterated as a probe beam is scanned across the sample surface or a portion thereof. A 2D image or map of a thermophysical property or a set of thermophysical properties can be generated from data processing.

JP 2016 145 737 A describes a method of measuring a liquid temperature in a microchannel, including the steps of: receiving light from a liquid which contains cresol red in a microchannel; measuring the intensity of the received light at least at one point of a wavelength excluding a wavelength of 470nm in a wavelength range of 340-640nm; and calculating the temperature of the liquid in the microchannel based on the measured light intensity.

### SUMMARY

### (Technical Problem)

However, the intensity of fluorescent light is typically very low, making detection of fluorescent light difficult. The temperature needs to be measured more accurately in a chemical reaction system, for example, in which isomerization, a side reaction, and the like are encouraged when the temperature in the system changes even slightly. The accuracy of known technology using fluorescent light might not satisfy the requirements for temperature measurement of a substance included in such a chemical reaction system.

It is an object of the present invention, to provide a temperature measurement apparatus, a temperature measurement system, and a temperature measurement method capable of non-contact, highly accurate measurement of the temperature of a substance included in a chemical reaction system. The object is solved by the features of the independent claims. The dependent claims are directed to preferred embodiments of the invention.

### (Solution to Problem)

A temperature measurement apparatus according to an embodiment includes a first irradiator configured to irradiate pulsed excitation light on a substance included in a chemical reaction system, a second irradiator configured to irradiate probe light on the substance, a detector configured to detect the probe light irradiated on the substance by the second irradiator, and a controller configured to calculate a temperature of the substance included in the chemical reaction system based on information related to a detection intensity of the probe light detected by the detector. This enables non-contact, highly accurate measurement of the temperature of the substance included in the chemical reaction system. In greater detail, the use of an optical method based on excitation light and probe light enables measurement of the temperature of the substance included in the chemical reaction system in a state such that the effect on the flow of the substance in the chemical reaction system is suppressed. Since the detection intensity of the probe light is sufficiently large relative to the detection intensity of fluorescent light, the S/N ratio of the detection signal relative to the detection intensity of the probe light detected by the detector increases. The calculation, based on the information related to the detection intensity of the probe light, of the temperature of the substance included in the chemical reaction system is therefore accurate.

Further, the information related to the detection intensity of the probe light includes a time change of the detection intensity of the probe light that accompanies a time change of absorbance of the substance due to the pulsed excitation light.

In an embodiment, the temperature measurement apparatus may further include a memory configured to store a correspondence relationship between the temperature of the substance and a lifetime of an excited state of the substance corresponding to a time constant of the time change of the absorbance of the substance, and the controller may be configured to calculate the lifetime of the excited state from the time change of the detection intensity of the probe light and calculate the temperature of the substance based on the correspondence relationship acquired from the memory. In general, the lifetime T of the excited state of the substance is in a range of several milliseconds to several seconds. Accordingly, the calculation of the temperature of the substance based on the lifetime of the excited state of the substance enables temperature measurement at a temporal resolution in a range of several milliseconds to several seconds. This enables temperature measurement in real time.

In an embodiment, the temperature measurement apparatus may further include an optical path adjuster configured to adjust an irradiation position of the excitation light irradiated by the first irradiator. This enables the temperature measurement apparatus to break down the temperature of the substance by position for measurement. The temperature measurement apparatus can thereby spatially break down and measure the temperature change due to the chemical reaction.

A temperature measurement system according to an embodiment includes one of the aforementioned temperature measurement apparatuses and a flow-through cell forming part of the chemical reaction system configured as a flow-type chemical reaction system in which the substance flows inside a passage. This enables non-contact, highly accurate measurement of the temperature of the substance included in the chemical reaction system. In greater detail, the use of an optical method based on excitation light and probe light enables measurement of the temperature of the substance included in the chemical reaction system, for example in the flow-through cell, in a state such that the effect on the flow of the substance in the flow-through cell is suppressed. Since the detection intensity of the probe light is sufficiently large relative to the detection intensity of fluorescent light, the S/N ratio of the detection signal relative to the detection intensity of the probe light detected by the detector increases. The calculation, based on the information related to the detection intensity of the probe light, of the temperature of the substance included in the flow-through cell is therefore accurate.

In an embodiment, the flow-type chemical reaction system may include a synthesis reaction system configured to synthesize a first material and a second material and obtain a product, and the first material and the second material may be synthesized in the flow-through cell.

In an embodiment, the first material and the second material may each include an amino acid, and the product may include a compound formed by a peptide bond. This enables measurement of a peptide formed by a plurality of amino acids.

A temperature measurement method according to an embodiment includes a first irradiation step of irradiating pulsed excitation light on a substance included in a chemical reaction system, a second irradiation step of irradiating probe light on the substance, a detection step of detecting the probe light irradiated on the substance in the second irradiation step, and a calculation step of calculating a temperature of the substance included in the chemical reaction system based on information related to a detection intensity of the probe light detected in the detection step. This enables non-contact, highly accurate measurement of the temperature of the substance included in the chemical reaction system. In greater detail, the use of an optical method based on excitation light and probe light enables measurement of the temperature of the substance included in the chemical reaction system in a state such that the effect on the flow of the substance in the chemical reaction system is suppressed. Since the detection intensity of the probe light is sufficiently large relative to the detection intensity of fluorescent light, the S/N ratio of the detection signal relative to the detection intensity of the probe light detected in the detection step increases. The calculation, based on the information related to the detection intensity of the probe light, of the temperature of the substance included in the chemical reaction system is therefore accurate.

Further, the information related to the detection intensity of the probe light includes a time change of the detection intensity of the probe light that accompanies a time change of absorbance of the substance due to the pulsed excitation light.

In an embodiment, the temperature measurement method may further include a storage step of storing a correspondence relationship between the temperature of the substance and a lifetime of an excited state of the substance corresponding to a time constant of the time change of the absorbance of the substance, and in the calculation step, the lifetime of the excited state may be calculated from the time change of the detection intensity of the probe light, and the temperature of the substance may be calculated based on the correspondence relationship stored in the storage step. In general, the lifetime T of the excited state of the substance is in a range of several milliseconds to several seconds. Accordingly, the calculation of the temperature of the substance based on the lifetime of the excited state of the substance enables temperature measurement at a temporal resolution in a range of several milliseconds to several seconds. This enables temperature measurement in real time.

In an embodiment, the temperature measurement method may further include an optical path adjustment step of adjusting an irradiation position of the excitation light irradiated in the first irradiation step. This enables the temperature of the substance to be measured while broken down by position. Accordingly, the temperature change due to the chemical reaction can be measured while broken down spatially.

### (Advantageous Effect)

The temperature measurement apparatus, the temperature measurement system, and the temperature measurement method according to the present disclosure are capable of non-contact, highly accurate measurement of the temperature of a substance included in a chemical reaction system.

### BRIEF DESCRIPTION OF THE DRAWINGS

In the accompanying drawings:
FIG. 1 is a schematic diagram illustrating an example configuration of a temperature measurement system according to an embodiment;
FIG. 2 is a block diagram including the temperature measurement system and chemical reaction system of FIG. 1;
FIG. 3 is a time sequence diagram illustrating an example of irradiation timing of excitation light and probe light;
FIG. 4 is a schematic diagram with a simplified illustration of the energy level of a substance flowing through a passage of a flow-through cell;
FIG. 5 is a schematic diagram illustrating the correspondence relationship between the lifetime of the excited state of a substance and the temperature of the substance;
FIG. 6 is a flowchart illustrating an example of operations of a temperature measurement apparatus of FIG. 1;
FIG. 7 is a schematic diagram illustrating a modification to the flow-through cell of the chemical reaction system of FIG. 1;
FIG. 8 is a schematic diagram illustrating an example of a synthesis reaction system using a flow synthesis method; and
FIG. 9 is a schematic diagram of an enlargement, at the position of a micro-mixer, of the state inside the synthesis reaction system of FIG. 8.

### DETAILED DESCRIPTION

The background and problems with known technology are described in greater detail.

For example, in a chemical reaction system using a flow method, a material is continuously charged into a column from one end, and a product is continuously obtained from the other end of the column, unlike with a batch method. A type of flow method to obtain a product by synthesizing a first material and a second material is referred to as a flow synthesis method. In a synthesis reaction system using the flow synthesis method, chemical synthesis proceeds while a substance flows through minute passages. A flow precision synthesis method that synthesizes a compound with a complex structure, for example, and requires precise control is also known in the context of chemical synthesis.

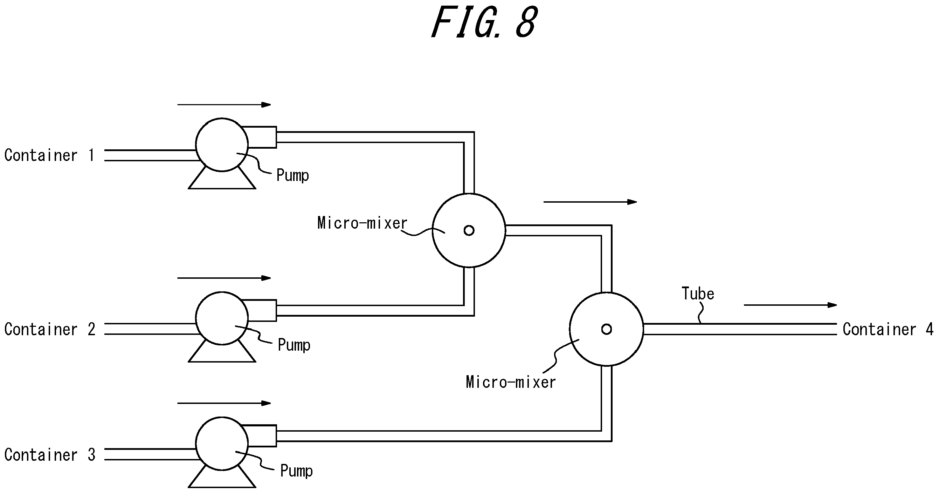

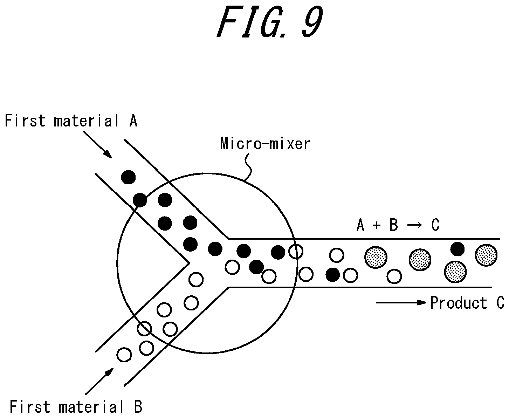

FIG. 8 schematically illustrates an example of a synthesis reaction system using a flow synthesis method. FIG. 9 is a schematic diagram of an enlargement, at the position of a micro-mixer, of the state inside the synthesis reaction system of FIG. 8. As illustrated in FIGS. 8 and 9, a micro-mixer and any appropriate tubes, such as Teflon^{®} (Teflon is a registered trademark in Japan, other countries, or both) tubes, are used in a synthesis reaction system using the flow synthesis method. In the flow synthesis method, a first material A and a second material B, for example, are sent as liquids by a pump at a predetermined flow rate and collide at high speed in the micro-mixer, mixing to produce a product C. The diffusion length shortens if the flow rate increases in a limited space, enabling high-speed mixing.

The mixing rate is controlled by the speed of the rotor blades in a known batch method. In the case of a large container volume, the mixing rate therefore runs the risk of being slower than the chemical reaction rate for a chemical reaction that proceeds on the order of seconds. This leads to the problem of an inability to control a high-speed chemical reaction due to the chemical reaction ending before mixing is complete. In a flow synthesis method, on the other hand, the mixing rate can be adjusted to be sufficiently faster than the chemical reaction rate by adjustment of the diameter of the micro-mixer, the diameter of the tubes, the flow rate, and the like. A high-speed chemical reaction can therefore be controlled with the flow synthesis method. Micro-mixers also have good heat dissipation by virtue of having a large surface area to volume ratio. Heat therefore dissipates quickly when a material with a high thermal conductivity is used. The accumulation of heat is thereby also suppressed within the micro-mixer and the tubes during a chemical reaction that generates heat.

While yield varies by chemical reaction, the final product yield is often highly dependent on temperature in a flow synthesis method that has these characteristics. The temperature in the micro-mixer and in the tubes therefore needs to be controlled to maintain the temperature in the micro-mixer and in the tubes constant.

Examples of using the flow synthesis method for peptide synthesis are known. One reason is that peptides are synthesized by sequential multi-stage synthesis of amino acids. Peptide synthesis is based on a coupling reaction of two amino acids. All amino acids have many functional groups. Amide bonds are formed by the carboxyl group of one amino acid reacting with the amide group of another amino acid to cause dehydration condensation. It is therefore necessary to protect all of the functional groups other than the carboxyl group of the one amino acid and all of the functional groups other than the amide group of the other amino acid.

The group that protects the amide group not contributing to amide binding of the one amino acid and the group that protects the carboxyl group not contributing to amide binding of the other amino acid are referred to as terminal-protecting groups. During peptide synthesis, a coupling reaction progresses sequentially in a state with the terminal-protecting groups provided. Temperature control is also necessary in the chemical reaction system during peptide synthesis. For example, isomerization, a side reaction, and the like could be encouraged by a slight change in temperature in the chemical reaction system, causing the final product yield to change. Strict temperature control becomes necessary if isomerization, a side reaction, and the like are accelerated by a change of only 1°C and greatly affect the final product yield. For example, an accuracy of 0.1°C is required during temperature measurement.

In this context, it is desirable to measure the temperature of a substance directly, with high accuracy, in a micro-mixer and tubes in which two amino acids are mixed and an amide binding reaction occurs. For example, a known platinum resistance temperature detector or thermistor sometimes has high accuracy, but a temperature contact needs to be fixed at the center in the radial direction inside the tube to use these temperature sensors to measure the temperature of a substance accurately. The inner diameter of the micro-mixer and the inner diameter of the tubes are generally in a range of several tens of micrometers to several millimeters to implement high-speed mixing with the flow synthesis method. A minute temperature sensor that has a temperature contact within the range of several tens of micrometers to several millimeters may not exist to begin with, and even if the temperature contact is within this range, it affects the flow of the substance due to being fixed at the center in the radial direction. This is problematic, as the chemical reaction and the final product yield may also be affected.

One method that could avoid such a problem is to affix a highly accurate, minute temperature sensor such as a minute platinum resistance temperature detector or a minute thermistor to a predetermined location, on the tube surface, that does not affect the flow of the substance in the chemical reaction system and then to predict the temperature of the substance indirectly. Since the temperature of the substance is not measured directly, however, the resulting temperature data is not very reliable. For example, error relative to the true value may occur due to heat flowing into the tube or flowing out of the tube at a different location than the predetermined location of the tube surface where the sensor is affixed.

To measure the temperature of the substance in the passage, a fluorescent substance could be introduced into the fluid, and the temperature could be measured by measuring the intensity of fluorescent light from the fluorescent substance, as in JP 2006-258537 A. The introduced fluorescent substance constitutes foreign matter in the chemical reaction system, however, leading to problems such as generation of by-products or blockage of the micro-mixer or tubes, depending on the amount of fluorescent substance introduced.

To address these problems, the present disclosure aims to provide a temperature measurement apparatus 10, a temperature measurement system 1, and a temperature measurement method capable of non-contact, highly accurate measurement of the temperature of a substance included in a chemical reaction system. Embodiments of the present disclosure are mainly described below with reference to the drawings.

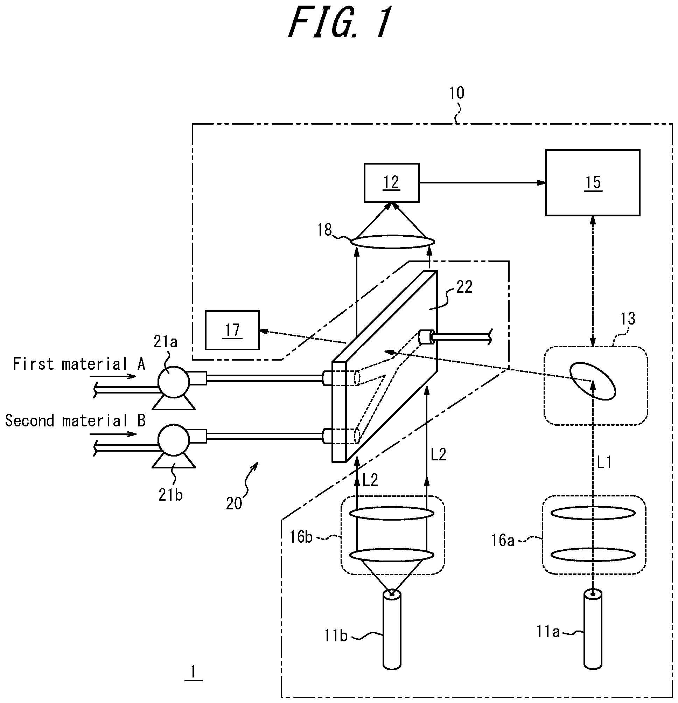

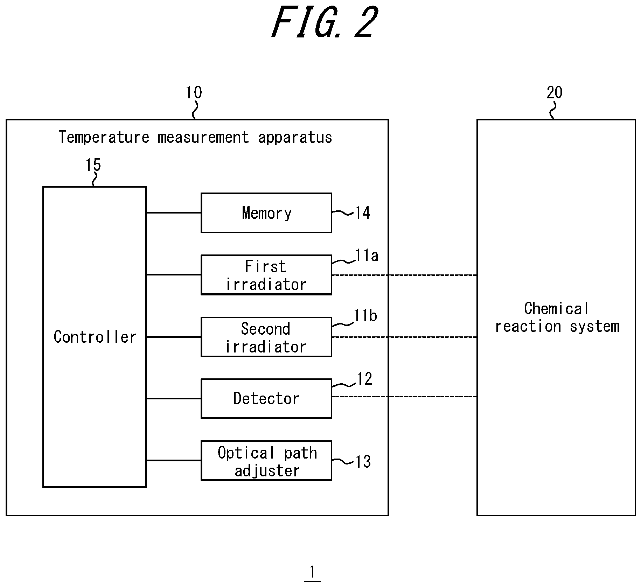

With reference to FIGS. 1 and 2, the configuration and functions of the temperature measurement apparatus 10 and the temperature measurement system 1 according to an embodiment are mainly described.

FIG. 1 is a schematic diagram illustrating an example configuration of the temperature measurement system 1 according to an embodiment. As illustrated in FIG. 1, the temperature measurement system 1 includes the temperature measurement apparatus 10 and a flow-through cell 22 that forms part of a chemical reaction system 20. The temperature measurement apparatus 10 is installed relative to the chemical reaction system 20 and measures the temperature of a substance included in the chemical reaction system 20 based on excitation light L1 and probe light L2.

The "substance" to be measured includes any molecule in a solution, for example. The solute included in the solution includes a molecule that absorbs the excitation light L1 and enters an excited state by an electron transitioning from a ground state. The solute included in the solution includes, for example, molecules that have π-electron conjugation and constitute an amino acid, a peptide, or the like. A medium included in the solution includes any molecules that do not exhibit strong absorption of the excitation light L1 and the probe light L2 in an absorption wavelength region while in the ground state and the excited state.

The chemical reaction system 20 includes any appropriate chemical reaction system. For example, the chemical reaction system 20 includes a flow-type chemical reaction system in which a substance flows through passages. In greater detail, the chemical reaction system 20 includes a chemical reaction system that synthesizes a first material A and a second material B to obtain a product C.

The first material A and the second material B in the chemical reaction system 20 include any appropriate compounds. For example, the first material A and the second material B include amino acids. Similarly, the product C in the chemical reaction system 20 includes any appropriate compound such as a polymer or oligomer. The product C may, for example, include a compound formed by an amide bond or a compound formed by a peptide bond based on a plurality of amino acids.

The chemical reaction system 20 includes a first pump 21a that sends the first material A as a liquid at a predetermined flow rate and a second pump 21b that sends the second material B as a liquid at a predetermined flow rate. The chemical reaction system 20 includes a flow-through cell 22 that synthesizes the first material A and the second material B sent as liquids by the first pump 21a and the second pump 21b. In FIG. 1, the passage of the flow-through cell 22 is Y-shaped. The first material A and the second material B sent as liquids by the first pump 21a and the second pump 21b first flow through independent passages, are subsequently synthesized by the Y-shaped passage in the flow-through cell 22, and are ejected by one passage. The tube diameter of each passage forming the chemical reaction system 20 is, for example, within a range of several tens of micrometers to several millimeters.

FIG. 2 is a block diagram including the temperature measurement system 1 and chemical reaction system 20 of FIG. 1. As illustrated in FIG. 2, the temperature measurement apparatus 10 includes a first irradiator 11a, a second irradiator 11b, a detector 12, an optical path adjuster 13, a memory 14, and a controller 15.

The first irradiator 11a includes any appropriate light source, such as a semiconductor laser. The first irradiator 11a irradiates pulsed excitation light L1, via any appropriate optical system included in the temperature measurement apparatus 10, on the substance included in the chemical reaction system 20. In greater detail, the first irradiator 11a irradiates pulsed excitation light L1 on the substance flowing through the passage of the flow-through cell 22 of the chemical reaction system 20. The wavelength of the excitation light L1 irradiated by the first irradiator 11a is included in a first wavelength region. For example, the first wavelength region includes the ultraviolet region, the visible light region, or the like.

The second irradiator 11b includes any appropriate light source, such as a semiconductor laser. The second irradiator 11b irradiates probe light L2, via any appropriate optical system included in the temperature measurement apparatus 10, on the substance included in the chemical reaction system 20. In greater detail, the second irradiator 11b irradiates probe light L2 on the substance flowing through the passage of the flow-through cell 22 of the chemical reaction system 20. The second irradiator 11b may irradiate the probe light L2 as continuous light or irradiate the probe light L2 as pulsed light. The wavelength of the probe light L2 irradiated by the second irradiator 11b is included in a second wavelength region. For example, the second wavelength region includes the visible light region, the infrared region, or the like.

The detector 12 includes any appropriate optical detector, such as a photodiode. The detector 12 detects the probe light L2 that is irradiated by the second irradiator 11b and passes through the substance flowing in the chemical reaction system 20. In greater detail, the detector 12 detects the probe light L2 that passes through the substance flowing in the passage of the flow-through cell 22 of the chemical reaction system 20.

The optical path adjuster 13 includes any appropriate optical element, such as a mirror. The optical path adjuster 13 adjusts the irradiation position, in the chemical reaction system 20, of the excitation light L1 irradiated by the first irradiator 11a. In greater detail, the optical path adjuster 13 adjusts the irradiation position in the passage of the flow-through cell 22 of the chemical reaction system 20. In the optical path adjuster 13, a piezoelectric element or any other appropriate passive element is attached to a mirror and controlled based on a control signal from the controller 15, for example, thereby changing the angle or the like of the mirror to freely adjust the irradiation position of the excitation light L1.

The memory 14 includes any storage apparatus, such as a hard disk drive (HDD), a solid state drive (SSD), an electrically erasable programmable read-only memory (EEPROM), a read-only memory (ROM), and a random access memory (RAM), and stores information necessary for implementing operations of the temperature measurement apparatus 10. The memory 14 may function as a main storage apparatus, an auxiliary storage apparatus, or a cache memory. The memory 14 is not limited to being internal to the temperature measurement apparatus 10 and may be an external storage apparatus connected through a digital input/output port or the like, such as USB. The memory 14 stores a correspondence relationship between the temperature of the substance and the lifetime T of the excited state of the substance corresponding to the time constant of the time change of the absorbance of the substance.

The controller 15 includes one or more processors. For example, the controller 15 includes a processor capable of processing related to the temperature measurement apparatus 10. The controller 15 is connected to each component configuring the temperature measurement apparatus 10 and controls and manages the temperature measurement apparatus 10 overall, starting with the components thereof. The controller 15 calculates the temperature of the substance included in the chemical reaction system 20 based on information related to the detection intensity of the probe light L2 detected by the detector 12. The "information related to the detection intensity of the probe light L2" includes the time change of the detection intensity of the probe light L2 that accompanies the time change of the absorbance of the substance due to the pulsed excitation light L1. The controller 15 calculates the lifetime T of the excited state of the substance from the time change of the detection intensity of the probe light L2 and calculates the temperature of the substance based on the correspondence relationship, acquired from the memory 14, between the lifetime T of the excited state of the substance and the temperature of the substance.

The controller 15 may, for example, judge whether the calculated amount of the time change of the temperature has exceeded a predetermined threshold. When it is judged that the calculated amount of the time change of the temperature has exceeded the predetermined threshold, the controller 15 may notify the user by any appropriate method. For example, to notify the user, the controller 15 may use any appropriate output interface capable of notifying the user that the calculated amount of the time change of the temperature has exceeded the predetermined threshold. Such an output interface may include an output interface forming any appropriate display screen or an audio output interface such as a speaker. The controller 15 may, for example, provide notification by a visual method using image, character, or color display, light emission, or the like; an auditory method using audio such as an alarm or voice guidance; or a combination of these methods. Notification by the controller 15 is not limited to a visual or auditory method and may include any method recognizable by the user. For example, the controller 15 may notify the user with a vibration pattern or the like.

Returning to FIG. 1, the configuration and functions of the optical system forming the temperature measurement system 1 are mainly described.

The excitation light L1 irradiated from the first irradiator 11a is adjusted by a first beam adjuster 16a, which is formed by any appropriate optical element such as a lens, so that the beam diameter of the excitation light L1 is smaller than the beam diameter of the probe light L2 at a position in the passage of the flow-through cell 22. The optical path of the excitation light L1 that passes through the first beam adjuster 16a is adjusted by the optical path adjuster 13. The excitation light L1 is thereby incident on any position, on the passage of the flow-through cell 22, where the user wishes to measure the temperature. Accordingly, spatial resolution is set during temperature measurement inside the chemical reaction system 20. The excitation light L1 that passes through the passage of the flow-through cell 22 is absorbed by a laser damper 17. Unwanted scattering and reflection of the excitation light L1 is thereby suppressed.

The probe light L2 irradiated from the second irradiator 11b is adjusted by a second beam adjuster 16b, which is formed by any appropriate optical element such as a lens, to be incident on the entire passage of the flow-through cell 22. The probe light L2 that is incident on and passes through the entire passage of the flow-through cell 22 is focused on the detector 12 by a condensing lens 18.

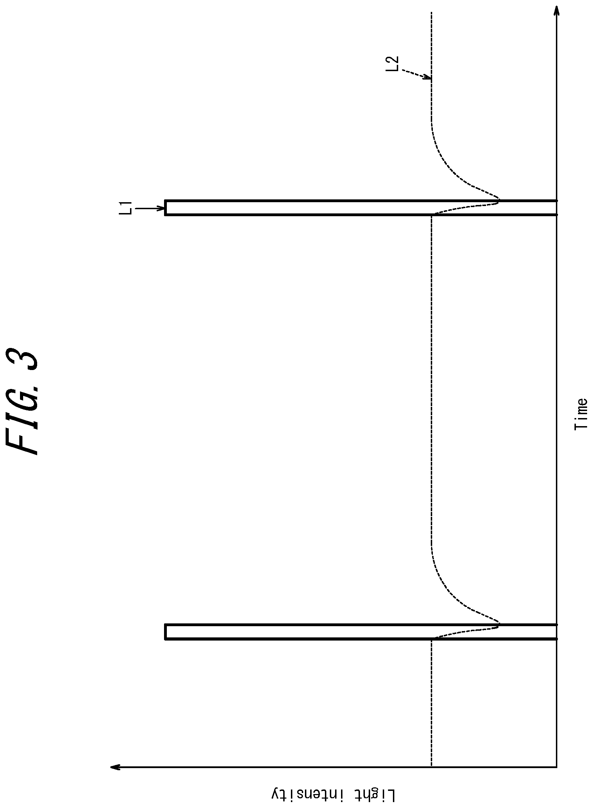

FIG. 3 is a time sequence diagram illustrating an example of irradiation timing of the excitation light L1 and the probe light L2. The vertical axis in FIG. 3 represents the light intensity of each of the excitation light L1 and the probe light L2. The horizontal axis in FIG. 3 represents time. An example of control, performed by the controller 15, of the irradiation timing of the excitation light L1 and the probe light L2 is mainly described with reference to FIG. 3.

The controller 15 controls the first irradiator 11a to irradiate the excitation light L1 as pulsed light having a predetermined period, for example. On the other hand, the controller 15 controls the second irradiator 11b to irradiate probe light L2 as continuous light, for example.

The absorbance of the substance flowing through the passage of the flow-through cell 22 changes due to irradiation of the pulsed excitation light L1. For example, the absorbance of the substance flowing through the passage of the flow-through cell 22 increases due to the pulsed excitation light L1. At this time, the detection intensity of the probe light L2 decreases. When irradiation of the pulsed excitation light L1 stops, the absorbance of the substance flowing through the passage of the flow-through cell 22 decreases in accordance with an exponential function whose time constant is the lifetime T of the excited state of the substance excited by the excitation light L1, for example. The absorbance thus returns to the value before irradiation of the excitation light L1. At this time, the detection intensity of the probe light L2 increases based on an exponential function whose time constant is the lifetime T of the excited state, and the detection intensity returns to the value before irradiation of the excitation light L1.

The controller 15 may execute any appropriate processing on a detection signal, such as the one in FIG. 3, related to the time change of the detection intensity of the probe light L2 detected by the detector 12. For example, the controller 15 may execute processing to average the detection signal, such as the one in FIG. 3, each period. This improves the S/N ratio of the detection signal.

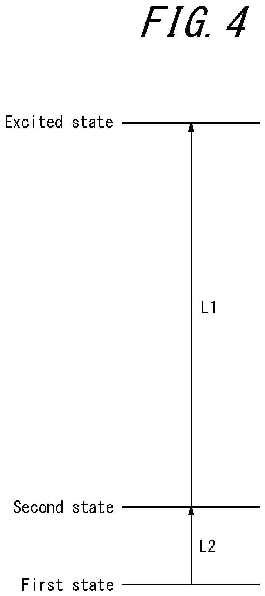

FIG. 4 is a schematic diagram with a simplified illustration of the energy level of the substance flowing through the passage of the flow-through cell 22. In general, the energy level structure of the substance flowing through the passage of the flow-through cell 22 is a complex structure including electronic levels, vibrational levels, and rotational levels. Only three representative levels are illustrated in FIG. 4, however, to simplify the explanation. The principle by which a change in the detection intensity of the probe light L2, as illustrated in FIG. 3, is obtained based on the excitation light L1 is mainly described with reference to FIG. 4.

The wavelength of the probe light L2 is, for example, adjusted to substantially match the absorption wavelength of the energy transition between the first state and the second state in FIG. 4. The wavelength of the excitation light L1 is, for example, adjusted to substantially match the absorption wavelength of the energy transition between the second state and the excited state in FIG. 4. When the excitation light L1 is absorbed, a portion of the population that was in the second state transitions to the excited state. The difference between the population in the second state and the population in the first state thereby increases, and the absorbance of the substance at the energy transition between the first state and the second state increases. The detection intensity of the probe light L2 therefore decreases.

The population in the excited state is characterized by attempting to return to the ground state due to being energetically unstable. If irradiation of the excitation light L1 is suspended in this state, the population in the excited state relaxes to the second state over the lifetime T. As the population in the excited state relaxes to the second state over the lifetime T, the population in the second state returns to the value before irradiation of the excitation light L1. The difference between the population in the second state and the population in the first state thereby decreases in accordance with the lifetime T. The absorbance of the substance at the energy transition between the first state and the second state thus decreases in accordance with the lifetime T. Consequently, the detection intensity of the probe light L2 increases in accordance with the lifetime T and returns to the value before irradiation of the excitation light L1.

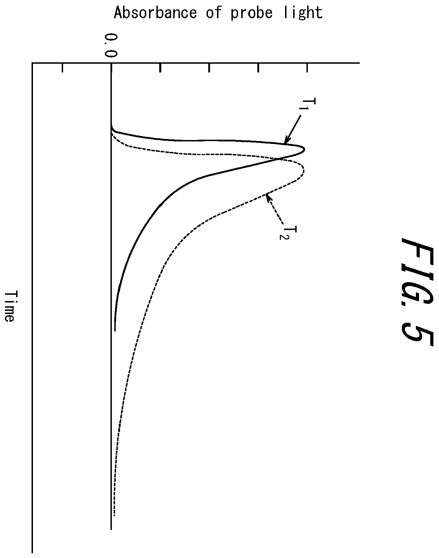

FIG. 5 is a schematic diagram illustrating the correspondence relationship between the lifetime T of the excited state of a substance and the temperature of the substance. The graph in FIG. 5 illustrates the time change of absorbance of the probe light L2, derived based on the time change of the detection intensity of the probe light L2 illustrated in the graph in FIG. 3.

The controller 15 calculates the lifetime T of the excited state of the substance from the time change of the detection intensity of the probe light L2, as illustrated in FIG. 3. The lifetime T of the excited state depends on the temperature of the substance in the excited state. Accordingly, when the temperature of the substance differs, the value of the lifetime T of the excited state is T₁ at one temperature but is T₂ at another temperature, as illustrated in FIG. 5. For example, the user or the like experimentally acquires the correspondence relationship between the lifetime T of the excited state of the substance and the temperature of the substance in advance and stores the correspondence relationship in the memory 14. The controller 15 can thereby calculate the temperature of the substance by comparing the lifetime T of the excited state, calculated from the time change of a newly measured detection intensity of the probe light L2, with the aforementioned correspondence relationship.

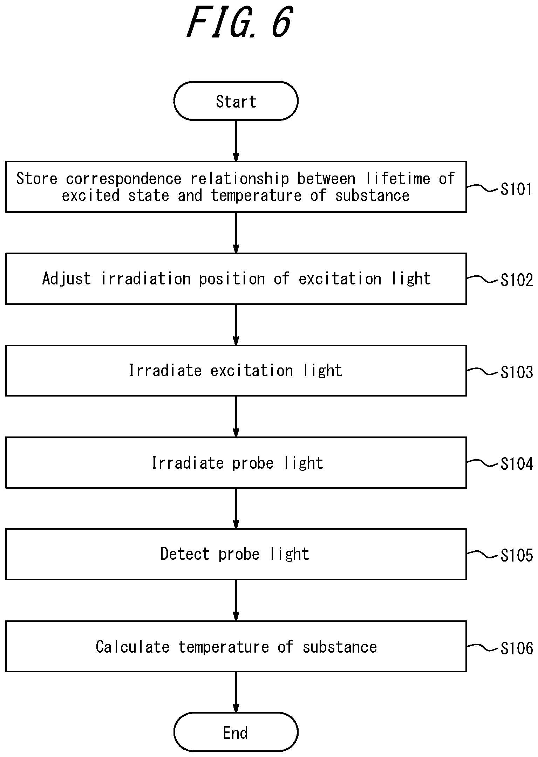

FIG. 6 is a flowchart illustrating an example of operations of the temperature measurement apparatus 10 of FIG. 1. The main procedures of a temperature measurement method using the temperature measurement apparatus 10 are described with reference to FIG. 6.

In step S101, the controller 15 stores a correspondence relationship between the lifetime T of the excited state of a substance and the temperature of the substance in the memory 14.

In step S102, the controller 15 causes the optical path adjuster 13 to adjust the irradiation position of the excitation light L1 irradiated by the first irradiator 11a.

In step S103, the controller 15 controls the first irradiator 11a to irradiate pulsed excitation light L1 on the substance included in the chemical reaction system 20.

In step S104, the controller 15 controls the second irradiator 11b to irradiate probe light L2 on the substance included in the chemical reaction system 20.

In step S105, the controller 15 causes the detector 12 to detect the probe light L2 irradiated in step S104.

In step S106, the controller 15 calculates the temperature of the substance included in the chemical reaction system 20 based on information related to the detection intensity of the probe light L2 detected in step S105.

The above-described temperature measurement apparatus 10, temperature measurement system 1, and temperature measurement method according to an embodiment are capable of non-contact, highly accurate measurement of the temperature of the substance included in the chemical reaction system 20. In greater detail, the use of an optical method based on the excitation light L1 and the probe light L2 enables measurement of the temperature of the substance included in the chemical reaction system 20 in a state such that the effect on the flow of the substance in the chemical reaction system 20 is suppressed. Since the detection intensity of the probe light L2 is sufficiently large relative to the detection intensity of fluorescent light, the S/N ratio of the detection signal relative to the detection intensity of the probe light L2 detected by the detector 12 increases. The calculation, based on the information related to the detection intensity of the probe light L2, of the temperature of the substance included in the chemical reaction system 20 is therefore accurate.

In general, the lifetime T of the excited state of the substance is in a range of several milliseconds to several seconds. Accordingly, the temperature can be measured at a temporal resolution in a range of several milliseconds to several seconds. This enables temperature measurement in real time, improving the measurement efficiency. Consequently, a temperature change in the chemical reaction system 20 can be detected in real time, and the user can be notified. The user or the like can adjust any parameter related to the chemical reaction system 20 in accordance with this notification to suppress isomerization, a side reaction, and the like and avoid a change in the final product yield.

According to the temperature measurement apparatus 10, temperature measurement system 1, and temperature measurement method of an embodiment, more types of chemical reaction systems 20 can be measured than with a known method using fluorescent light. In general, a substance in the excited state relaxes to the ground state by emitting fluorescent light. Some substances, however, relax to the ground state while the molecular structure changes, for example without emitting fluorescent light. The temperature of such a substance included in the chemical reaction system 20 can still be calculated, without dependence on the process of relaxation from the excited state, by the time change of the detection intensity of the probe light L2 being measured.

The beam diameter of the excitation light L1 can be adjusted to be smaller than the beam diameter of the probe light L2 at the position of the passage of the flow-through cell 22, and the irradiation position of the excitation light L1 can be freely adjusted by the optical path adjuster 13. The temperature of the substance can thereby be broken down by position in the passage of the flow-through cell 22 and measured. For example, the temperature measurement apparatus 10 can measure the temperature of the substance using any coordinates along two orthogonal axes at the position of the flow-through cell 22. Additionally, by the excitation L1 being irradiated as pulsed light, the temperature of the substance can be broken down by any units of time and measured. The temperature measurement apparatus 10 can thereby spatially and temporally resolve and measure the temperature change due to the chemical reaction.

The inclusion of a synthesis reaction system in the chemical reaction system 20 also enables measurement of the reaction heat caused by the chemical reaction when the first material A and the second material B are mixed in the flow-through cell 22, the mixing heat produced by mixing of the first material A and the second material B, and the like.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are considered to be included therein.

For example, the shape, arrangement, orientation, number, and the like of the above-described components are not limited to the above explanation or the drawings. The shape, arrangement, orientation, number, and the like of each component may be selected freely as long as the functions of the component can be achieved.

For example, the functions and the like included in each of the steps in the above-described temperature measurement method may be rearranged in any logically consistent way. A plurality of steps may be combined into one, and individual steps may be divided.

The temperature measurement apparatus 10, temperature measurement system 1, and temperature measurement method have mainly been described above, but the present disclosure may also be implemented as a program to be executed by a processor included in the controller 15 or as a storage medium storing the program. Such embodiments are also to be understood as falling within the scope of the present disclosure.

The excitation light L1 and the probe light L2 have been described as being irradiated on the passage of the flow-through cell 22 included in the chemical reaction system 20, but the irradiation position is not limited to this example. The excitation light L1 and the probe light L2 may be irradiated onto any position in the chemical reaction system 20 enabling incidence on the substance included in the chemical reaction system 20. For example, the excitation light L1 and the probe light L2 may be irradiated onto at least one of two independent passages arranged between the pumps and the flow-through cell 22 or may be irradiated onto one passage that connects to the discharge side of the flow-through cell 22.

As illustrated in FIG. 3, the controller 15 has been described as controlling the second irradiator 11b to irradiate the probe light L2 as continuous light, but the control method is not limited to this example. The controller 15 may control the second irradiator 11b to irradiate the probe light L2 as pulsed light, having a predetermined width and period, following the pulsed excitation light L1. Power consumption by the temperature measurement apparatus 10 is thereby reduced.

As illustrated in FIGS. 3 and 5, the absorbance of the substance has been described as increasing due to the excitation light L1, and the detection intensity of the probe light L2 has been described as decreasing. The time change of the absorbance of the substance and the time change of the detection intensity of the probe light L2 are not, however, limited to these examples. For example, if the wavelength of the excitation light L1 is adjusted to substantially match the absorption wavelength of the energy transition between the first state and the excited state instead of between the second state and the excited state in FIG. 4, then a portion of the population in the first state transitions to the excited state when the excitation light L1 is absorbed. The population in the first state therefore decreases, and the absorbance of the substance with respect to the probe light L2 decreases. Accordingly, the detection intensity of the probe light L2 increases. In this way, the absorbance of the substance may decrease due to the excitation light L1, and the detection intensity of the probe light L2 may increase.

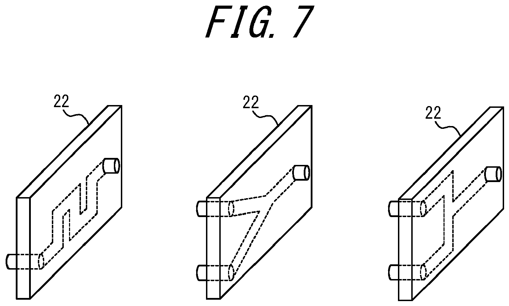

FIG. 7 is a schematic diagram illustrating a modification to the flow-through cell 22 of the chemical reaction system 20 of FIG. 1. The passage of the flow-through cell 22 has been illustrated as being formed in a Y-shape, and the chemical reaction system 20 has been illustrated as a flow-type synthesis reaction system, as illustrated in FIG. 1, but this example is not limiting. In addition to a Y-shape, the passage of the flow-through cell 22 may have a shape such that one passage is bent multiple times at right angles, as illustrated on the left side of FIG. 7. The chemical reaction system 20 may, in this case, be a different flow-type chemical reaction system than a synthesis reaction system. Furthermore, the passage of the flow-through cell 22 may have a shape such that two passages are each bent a right angle and are then integrated into one passage, as illustrated on the right side of FIG. 7. The chemical reaction system 20 may, in this case, be a flow-type synthesis reaction system.

The passage of the flow-through cell 22 may have any shape other than the shapes illustrated in FIG. 7. For example, the passage of the flow-through cell 22 may be formed to have a shape such that three or more independent passages are integrated into one.

The chemical reaction system 20 has been described as including a flow-type synthesis reaction system, but this example is not limiting. The chemical reaction system 20 may include a batch-type chemical reaction system.

The tube diameter of each passage forming the chemical reaction system 20 has been described as falling within a range of several tens of micrometers to several millimeters, but this example is not limiting. The tube diameter of each passage forming the chemical reaction system 20 may have a larger value, such as several cm.

### REFERENCE SIGNS LIST

- 1: Temperature measurement system
- 10: Temperature measurement apparatus
- 11a: First irradiator
- 11b: Second irradiator
- 12: Detector
- 13: Optical path adjuster
- 14: Memory
- 15: Controller
- 16a: First beam adjuster
- 16b: Second beam adjuster
- 17: Laser damper
- 18: Condensing lens
- 20: Chemical reaction system
- 21a: First pump
- 21b: Second pump
- 22: Flow-through cell
- A: First material
- B: Second material
- C: Product
- L1: Excitation light
- L2: Probe light
- T: Lifetime

## Claims

1. A temperature measurement apparatus (10) comprising:
a first irradiator (11a) configured to irradiate pulsed excitation light on a substance included in a chemical reaction system (20);
a second irradiator (11b) configured to irradiate probe light on the substance;
a detector (12) configured to detect the probe light irradiated on the substance by the second irradiator (11b); and
a controller (15) configured to calculate a temperature of the substance included in the chemical reaction system (20) based on information related to a detection intensity of the probe light detected by the detector (12),
**characterized in that**
the information related to the detection intensity of the probe light includes a time change of the detection intensity of the probe light that accompanies a time change of absorbance of the substance due to the pulsed excitation light.

2. The temperature measurement apparatus (10) of claim 1, further comprising:
a memory (14) configured to store a correspondence relationship between the temperature of the substance and a lifetime of an excited state of the substance corresponding to a time constant of the time change of the absorbance of the substance;
wherein the controller (15) is configured to calculate the lifetime of the excited state from the time change of the detection intensity of the probe light and calculate the temperature of the substance based on the correspondence relationship acquired from the memory (14).

3. The temperature measurement apparatus (10) of claim 1 or 2, further comprising an optical path adjuster (13) configured to adjust an irradiation position of the excitation light irradiated by the first irradiator (11a).

4. A temperature measurement system comprising:
the temperature measurement apparatus (10) of any one of claims 1 to 3; and
a flow-through cell (22) forming part of the chemical reaction system (20) configured as a flow-type chemical reaction system (20) in which the substance flows inside a passage.

5. The temperature measurement system of claim 4,
wherein the flow-type chemical reaction system (20) includes a synthesis reaction system configured to synthesize a first material (A) and a second material (B) and obtain a product; and
wherein the first material (A) and the second material (B) are synthesized in the flow-through cell (22).

6. The temperature measurement system of claim 5,
wherein the first material (A) and the second material (B) each include an amino acid; and
wherein the product includes a compound formed by a peptide bond.

7. A temperature measurement method comprising:
a first irradiation step (S103) of irradiating pulsed excitation light on a substance included in a chemical reaction system (20);
a second irradiation step (S104) of irradiating probe light on the substance;
a detection step (S105) of detecting the probe light irradiated on the substance in the second irradiation step (S104); and
a calculation step (S106) of calculating a temperature of the substance included in the chemical reaction system (20) based on information related to a detection intensity of the probe light detected in the detection step (S105),
**characterized in that**
the information related to the detection intensity of the probe light includes a time change of the detection intensity of the probe light that accompanies a time change of absorbance of the substance due to the pulsed excitation light.

8. The temperature measurement method of claim 7, further comprising:
a storage step (S101) of storing a correspondence relationship between the temperature of the substance and a lifetime of an excited state of the substance corresponding to a time constant of the time change of the absorbance of the substance;
wherein in the calculation step (S106), the lifetime of the excited state is calculated from the time change of the detection intensity of the probe light, and the temperature of the substance is calculated based on the correspondence relationship stored in the storage step (S101).

## Patentansprüche

1. Temperaturmessvorrichtung (10), die aufweist:
eine erste Abstrahlungseinrichtung (11a), die ausgelegt ist, gepulstes Anregungslicht auf eine Substanz abzustrahlen, die in einem chemischen Reaktionssystem (20) enthalten ist;
eine zweite Abstrahlungseinrichtung (11b), die ausgelegt ist, Messlicht auf die Substanz abzustrahlen;
einen Detektor (12), der ausgelegt ist, das Messlicht, das von der zweiten Abstrahlungseinrichtung (11b) auf die Substanz abgestrahlt wird, zu erfassen; und
eine Steuerung (15), die ausgelegt ist, eine Temperatur der Substanz, die in dem chemischen Reaktionssystem (20) enthalten ist, auf der Grundlage von Informationen betreffend eine Erfassungsintensität des Messlichtes, das durch den Detektor (12) erfasst wird, zu berechnen,
**dadurch gekennzeichnet, dass**
die Informationen betreffend die Erfassungsintensität des Messlichtes eine zeitliche Änderung der Erfassungsintensität des Messlichtes enthält, die mit einer zeitlichen Änderung eines Absorptionsvermögens der Substanz aufgrund des gepulsten Anregungslichtes einhergeht.

2. Temperaturmessvorrichtung (10) nach Anspruch 1, die außerdem aufweist:
einen Speicher (14), der ausgelegt ist, eine Entsprechungsbeziehung zwischen der Temperatur der Substanz und einer Lebensdauer eines Anregungszustands der Substanz entsprechend einer Zeitkonstante der zeitlichen Änderung des Absorptionsvermögens der Substanz zu speichern;
wobei die Steuerung (15) ausgelegt ist, die Lebensdauer des Anregungszustands aus der zeitlichen Änderung der Erfassungsintensität des Messlichtes zu berechnen und die Temperatur der Substanz auf der Grundlage der Entsprechungsbeziehung, die aus dem Speicher (14) beschafft wird, zu berechnen.

3. Temperaturmessvorrichtung (10) nach Anspruch 1 oder 2, die außerdem einen Optischer-Pfad-Einsteller (13) aufweist, der ausgelegt ist, eine Bestrahlungsposition des Anregungslichtes, das durch die erste Abstrahlungseinrichtung (11a) abgestrahlt wird, einzustellen.

4. Temperaturmesssystem, das aufweist:
die Temperaturmessvorrichtung (10) nach einem der Ansprüche 1 bis 3; und
eine Durchflusszelle (22), die einen Teil des chemischen Reaktionssystems (20) bildet, das als ein chemisches Reaktionssystem (20) vom Fließtyp ausgebildet ist, bei dem die Substanz innerhalb eines Kanals fließt.

5. Temperaturmesssystem nach Anspruch 4,
wobei das chemische Reaktionssystem (20) vom Fließtyp ein Synthesereaktionssystem enthält, das ausgelegt ist, ein erstes Material (A) und ein zweites Material (B) zu synthetisieren und ein Produkt zu erhalten; und
wobei das erste Material (A) und das zweite Material (B) in der Durchflusszelle (22) synthetisiert werden.

6. Temperaturmesssystem nach Anspruch 5,
wobei das erste Material (A) und das zweite Material (B) jeweils eine Aminosäure enthalten; und
wobei das Produkt eine Verbindung enthält, die durch eine Peptidbindung ausgebildet wird.

7. Temperaturmessverfahren, das aufweist:
einen ersten Abstrahlungsschritt (S103) zum Abstrahlen von gepulstem Anregungslicht auf eine Substanz, die in einem chemischen Reaktionssystem (20) enthalten ist;
einen zweiten Abstrahlungsschritt (S104) zum Abstrahlen von Messlicht auf die Substanz;
einen Erfassungsschritt (S105) zum Erfassen des Messlichtes, das in dem zweiten Abstrahlungsschritt (S104) auf die Substanz abgestrahlt wird; und
einen Berechnungsschritt (S106) zum Berechnen einer Temperatur der Substanz, die in dem chemischen Reaktionssystem (20) enthalten ist, auf der Grundlage von Informationen betreffend eine Erfassungsintensität des Messlichtes, das in dem Erfassungsschritt (S105) erfasst wird,
**dadurch gekennzeichnet, dass**
die Informationen betreffend die Erfassungsintensität des Messlichtes eine zeitliche Änderung der Erfassungsintensität des Messlichtes, die mit einer zeitlichen Änderung eines Absorptionsvermögens der Substanz aufgrund des gepulsten Anregungslichtes einhergeht, enthalten.

8. Temperaturmessverfahren nach Anspruch 7, das außerdem aufweist:
einen Speicherschritt (S101) zum Speichern einer Entsprechungsbeziehung zwischen der Temperatur der Substanz und einer Lebensdauer eines Anregungszustands der Substanz entsprechend einer Zeitkonstante der zeitlichen Änderung des Absorptionsvermögens der Substanz;
wobei in dem Berechnungsschritt (S106) die Lebensdauer des Anregungszustands aus der zeitlichen Änderung der Erfassungsintensität des Messlichtes berechnet wird und die Temperatur der Substanz auf der Grundlage der Entsprechungsbeziehung, die in dem Speicherschritt (S101) gespeichert wird, berechnet wird.

## Revendications

1. Appareil de mesure de température (10) comprenant :
un premier irradiateur (11a) configuré pour irradier une lumière d'excitation pulsée sur une substance incluse dans un système de réaction chimique (20) ;
un second irradiateur (11b) configuré pour irradier une lumière de sonde sur la substance ;
un détecteur (12) configuré pour détecter la lumière de sonde irradiée sur la substance par le second irradiateur (11b) ; et
un dispositif de commande (15) configuré pour calculer une température de la substance incluse dans le système de réaction chimique (20) sur la base d'informations liées à une intensité de détection de la lumière de sonde détectée par le détecteur (12),
**caractérisé en ce que**
les informations relatives à l'intensité de détection de la lumière de sonde incluent un changement temporel de l'intensité de détection de la lumière de sonde qui accompagne un changement temporel d'absorbance de la substance dû à la lumière d'excitation pulsée.

2. Appareil de mesure de température (10) selon la revendication 1, comprenant en outre :
une mémoire (14) configurée pour stocker une relation de correspondance entre la température de la substance et une durée de vie d'un état excité de la substance correspondant à une constante de temps du changement temporel de l'absorbance de la substance ;
dans lequel le dispositif de commande (15) est configuré pour calculer la durée de vie de l'état excité à partir du changement temporel de l'intensité de détection de la lumière de sonde et calculer la température de la substance sur la base de la relation de correspondance acquise à partir de la mémoire (14).

3. Appareil de mesure de température (10) selon la revendication 1 ou 2, comprenant en outre un ajusteur de trajet optique (13) configuré pour ajuster une position d'irradiation de la lumière d'excitation irradiée par le premier irradiateur (11a).

4. Système de mesure de température comprenant :
l'appareil de mesure de température (10) selon l'une quelconque des revendications 1 à 3 ; et
une cellule à écoulement continu (22) faisant partie du système de réaction chimique (20) configurée comme un système de réaction chimique de type à écoulement (20) dans lequel la substance s'écoule à l'intérieur d'un passage.

5. Système de mesure de température selon la revendication 4,
dans lequel le système de réaction chimique de type à écoulement (20) inclut un système de réaction de synthèse configuré pour synthétiser un premier matériau (A) et un second matériau (B) et obtenir un produit ; et
dans lequel le premier matériau (A) et le second matériau (B) sont synthétisés dans la cellule à écoulement continu (22).

6. Système de mesure de température selon la revendication 5,
dans lequel le premier matériau (A) et le second matériau (B) incluent chacun un acide aminé ; et
dans lequel le produit inclut un composé formé par une liaison peptidique.

7. Procédé de mesure de température comprenant :
une première étape d'irradiation (S103) consistant à irradier une lumière d'excitation pulsée sur une substance incluse dans un système de réaction chimique (20) ;
une seconde étape d'irradiation (S104) consistant à irradier une lumière de sonde sur la substance ;
une étape de détection (S105) consistant à détecter la lumière de sonde irradiée sur la substance dans la seconde étape d'irradiation (S104) ; et
une étape de calcul (S106) consistant à calculer une température de la substance incluse dans le système de réaction chimique (20) sur la base d'informations liées à une intensité de détection de la lumière de sonde détectée dans l'étape de détection (S105),
**caractérisé en ce que**
les informations relatives à l'intensité de détection de la lumière de sonde incluent un changement temporel de l'intensité de détection de la lumière de sonde qui accompagne un changement temporel d'absorbance de la substance dû à la lumière d'excitation pulsée.

8. Procédé de mesure de température selon la revendication 7, comprenant en outre :
une étape de stockage (S101) consistant à stocker une relation de correspondance entre la température de la substance et une durée de vie d'un état excité de la substance correspondant à une constante de temps du changement temporel de l'absorbance de la substance ;
dans lequel, dans l'étape de calcul (S106), la durée de vie de l'état excité est calculée à partir du changement temporel de l'intensité de détection de la lumière de sonde, et la température de la substance est calculée sur la base de la relation de correspondance stockée dans l'étape de stockage (S101).
